# EUROPÄISCHE PATENTANMELDUNG

(11) **EP 2 248 773 A1**
(43) Veröffentlichungstag der Anmeldung: **10.11.2010**
(21) Anmeldenummer: 10003960.1
(22) Anmeldetag: 15.04.2010
(51) Int. Cl.: C03B 3/02

(54) **Vorrichtung zum Vorwärmen von Glassscherbengemengen**

(30) Priorität: 04.05.2009 DE 102009019456
(71) Anmelder: Ardagh Glass GmbH, 31582 Nienburg (DE)
(72) Erfinder: Barklage, Hansjürgen, 31582 Nienburg (DE); Cieleback, Wolfgang, 31582 Nienburg (DE); Schaper, Rolf, 23812 Wahlstedt (DE)
(74) Vertreter: Aulich, Martin

(57) **Zusammenfassung**

Die Erfindung betrifft eine Vorrichtung zum Vorwärmen eines vorzugsweise mit Rohstoffen zur Glasherstellung angereicherten Glasscherbengemenges (12) mit einem Bunker (14) und darin gebildeten Strömungskanälen (22), wobei der Bunker (14) eine Mehrzahl von vertikal - ggf. versetzt - übereinander angeordneten, winklig zur Vertikalen, insbesondere horizontal verlaufenden Strömungskanälen (22) aufweist, wobei jeder Strömungskanal (22) zusammengesetzt ist aus einem Profil (34) zur Bildung einer oberen Hälfte desselben sowie einem sich unter dem Profil ausbildenden Schüttkegel aus dem Glasscherbengemenge (12), der die untere Hälfte des Strömungskanals (22) bildet, und wobei das Profil über mindestens zwei Schenkel (36a, b)verfügt, die den zwischen diesen befindlichen Raum seitlich begrenzen. Die Erfindung ist **dadurch gekennzeichnet, dass** zur Verringerung der Strömungsgeschwindigkeit in den Strömungskanälen (22) mindestens ein Schenkel (36a, b) des Profils (34), vorzugsweise beide Schenkel, über mindestens einen konvex gekrümmten Bereich (46) verfügt und/oder über einen ersten ungekrümmten Bereich (40) mit einem relativ zur Horizontalen ersten Neigungswinkel, an den sich ein ungekrümmter zweiter Bereich (42) mit einem abweichenden Neigungswinkel anschließt und/oder dass zur Verringerung der Strömungsgeschwindigkeit in den Strömungskanälen (22) mindestens zwei (22a, b, c) der unmittelbar - ggf. versetzt - übereinander angeordneten Strömungskanäle (22) bezogen auf die Strömungsrichtung im Sinne einer Parallelschaltung an eine gemeinsame Zuleitung (26a) angeschlossen sind.

## Beschreibung

Die Erfindung betrifft eine Vorrichtung zum Vorwärmen eines vorzugsweise mit Rohstoffen zur Glasherstellung angereicherten Glasscherbengemenges mit einem Bunker und darin gebildeten Strömungskanälen, wobei der Bunker eine Mehrzahl von - ggf. versetzt - übereinander angeordneten, winklig zur Vertikalen, insbesondere horizontal verlaufenden Strömungskanälen aufweist, wobei jeder Strömungskanal zusammengesetzt ist aus einem Profil zur Bildung einer oberen Hälfte desselben sowie einem sich unter dem Profil ausbildenden Schüttkegel aus dem Glasscherbengemenge, der die untere Hälfte des Strömungskanals bildet, und wobei das Profil über mindestens zwei Schenkel verfügt, die den zwischen diesen befindlichen Raum seitlich begrenzen.

Eine derartige Vorrichtung ist beispielsweise bekannt aus der DE 34 16 317 C2. Sie dient dazu, während des Glasherstellungsprozesses die Wärmeenergie der bei der Verbrennung der Rohstoffe im Schmelzofen entstehenden Abgase zur Vorwärmung des Glasscherbengemenges zu nutzen. Zu diesem Zweck werden die Abgase - ggf. indem sie zuvor nach Durchleitung durch einen Wärmetauscher die zum Schmelzvorgang notwendige Verbrennungsluft vorgewärmt haben - entlang der Strömungskanäle durch den Bunker geführt, nämlich durch das Glasscherbengemenge hindurch. Innerhalb des Bunkers wird die Wärmeenergie des Abgases mindestens teilweise auf das Glasscherbengemenge übertragen. Die Vorwärmung des Glasscherbengemenges führt letztlich zu einer Reduktion der bei dem Schmelzvorgang im Schmelzofen benötigten Wärmeenergie.

Nachteiligerweise werden allerdings die Abgase, die durch die Strömungskanäle des Bunkers geführt werden, durch an den Glasscherben anhaftende Stoffe verunreinigt.

Aus Gründen des Emissionsschutzes müssen die kalten Abgase im Anschluss an die Vorwärmung des Glasscherbengemenges gereinigt werden, bevor sie an die Umgebungsluft abgegeben werden können. Hierbei werden neben den aus den Glasscherbengemengen stammenden Schadstoffen noch dem Abgas ohnehin immanente Schadstoffe ausgefiltert.

Aus der DE 34 16 317 C2 ist es in diesem Zusammenhang bekannt, die kalten Abgase zu diesem Zweck durch einen sogenannten Nasswäscher zu leiten, in dem sie von einer Waschflüssigkeit berieselt werden. Hierbei werden Feststoffe aus dem Abgas ausgefällt und gasförmige Schadstoffe kondensiert.

Weiter ist es bekannt, dem Nasswäscher einen Elektrofilter nachzuschalten. Um die Schadgaskomponenten SOₓ, HCL und HF im Abgas auf emissionsrechtlich ausreichend niedrige Konzentrationen zu bringen, war es dabei bisher notwendig, dem Abgas Additive hinzuzufügen, die zu einer verbesserten Abscheidung der genannten Schadgaskomponenten im Elektrofilter führten.

Ausgehend von diesem Stand der Technik ist es Aufgabe der vorliegenden Erfindung, eine Vorwärmvorrichtung der eingangs genannten Art anzugeben, mit der die Konzentration mindestens eines Schadstoffes in dem Abgas nach Durchleiten desselben durch die Vorrichtung im Vergleich zum Stand der Technik verringert werden kann.

Diese Aufgabe wird gelöst durch eine Vorwärmvorrichtung mit den Merkmalen des Anspruchs 1.

Erfindungsgemäß wurde erkannt, dass eine Erniedrigung der Strömungsgeschwindigkeit des Abgases während der Durchleitung derselben durch den Bunker der Vorwärmvorrichtung zu zwei Effekten führt: Zum einen wird durch eine Erniedrigung der Strömungsgeschwindigkeit erreicht, dass das Abgas nach der Durchleitung einen geringeren, aus dem Glasscherbengemenge aufgenommenen Staubanteil aufweist. In ähnlicher Weise wird erreicht, dass die Konzentration anderer Schadgaskomponenten im Abgas, insbesondere SOₓ, HCL und/oder HF reduziert wird.

Die Ergebnisse werden erzielt, da das Abgas über einen im Vergleich zum Stand der Technik deutlich längeren Zeitraum mit dem vorbeiströmenden Glasscherbengemenge reagieren kann. Das Resultat der erfindungsgemäßen Strömungsgeschwindigkeitsreduktion ist derart positiv, dass nunmehr sogar auf die Zugabe von Additiven zur Erhöhung der Wirksamkeit des gegebenenfalls nachfolgenden Elektrofilters verzichtet werden kann. Je nach Gesamtauslegung der Vorwärmvorrichtung erscheint es denkbar, auf nachfolgende Filteranlagen sogar vollständig zu verzichten.

Die Erniedrigung der Strömungsgeschwindigkeit wird gemäß der ersten erfindungsgemäßen Ausführungsform erreicht, indem der Strömungsquerschnitt der Strömungskanäle gegenüber den aus dem Stand der Technik bekannten Strömungsquerschnitten verändert, insbesondere vergrößert wird.

Zu diesem Zweck kann das den Strömungskanal jeweils nach oben begrenzende Profil mindestens einen Schenkel aufweisen, der über einen konvex, d.h. nach außen gekrümmten Bereich verfügt. Bedingt durch die mindestens bereichsweise konvexe Krümmung der Profile ist der zwischen diesen eingeschlossene oder der von diesen begrenzte Raum besonders groß. Mithin ist auch der Strömungsquerschnitt der oben von dem Profil und unten von dem Schüttkegel des Glasscherbengemenges gebildeten Strömungskanals besonders groß.

In der Regel verfügt jedes erfindungsgemäße Profil allgemein über eine obere, horizontal oder - bei entsprechendem Verlauf des Profils in dem Bunker - winklig zur Horizontalen verlaufende Scheitellinie, wobei das Profil zwei bevorzugt identische Schenkel aufweist, die zu beiden Seiten der Scheitellinie wenigstens bereichsweise winklig zur Horizontalen nach unten verlaufen. Vorzugsweise ist das Profil dabei symmetrisch zu einer Mittelebene ausgebildet.

Was die Bereiche konvexer Krümmung betrifft, so weisen daher vorzugsweise beide Schenkel des Profils derartige Bereiche auf.

In einer besonderen Ausführungsform der Erfindung schließen sich diese Bereiche konvexer Krümmung jeweils unmittelbar an die Scheitellinie des Profils an. Dies kann auf unterschiedliche Weise geschehen.

Beispielsweise kann das Profil derart ausgebildet sein, dass sich die Tangente, die die konvexe Krümmung des einen Schenkels in einem auf der Scheitellinie liegenden Scheitelpunkt des Profils beschreibt sowie die Tangente, die die konvexe Krümmung des anderen Schenkels in demselben Scheitelpunkt beschreibt, winklig zueinander verlaufen. In der Regel wird dadurch die Scheitellinie eine obere Knicklinie bzw. Kante des Profils sein.

Alternativ kann das Profil derart ausgebildet sein, dass die Tangente, die die konvexe Krümmung des einen Schenkels in einem auf der Scheitellinie liegenden Scheitelpunkt des Profils beschreibt sowie die Tangente, die die konvexe Krümmung des anderen Schenkels in demselben Scheitelpunkt beschreibt, identisch sind bzw. übereinander liegen. Das Profil verfügt dann im oberen Bereich beispielsweise über eine insgesamt halbkreis- oder bogenartige Form ohne ausgebildete Knicklinie- oder Knickkante.

Gemäß einer weiteren Ausführungsform des erfindungsgemäßen Profils verfügt ein oder jeder Profilschenkel jeweils über einen ersten ungekrümmten Bereich mit einem im Bunker angeordneten Zustand relativ zur Horizontalen ersten Neigungswinkel, sowie einen zweiten ungekrümmten Bereich, der sich an den ersten ungekrümmten Bereich anschließt und der einen von dem ersten Neigungswinkel des ersten ungekrümmten Bereichs abweichenden, zweiten Neigungswinkel aufweist. Vorzugsweise ist dabei der Neigungswinkel des ersten ungekrümmten Bereichs zur Horizontalen kleiner als der des zweiten ungekrümmten Bereichs. So kann der erste ungekrümmte Bereich beispielsweise unter einer Neigung von zwischen 20 - 35 ° zur Horizontalen nach unten geführt sein. Daran kann sich dann der zweite ungekrümmte Bereich anschließen mit einem Neigungswinkel, der zwischen 70° - 90° liegt. Besonders bevorzugt verläuft der zweite ungekrümmte Bereich allerdings unmittelbar (im Wesentlichen) senkrecht zur Horizontalen nach unten, d.h. 90° zur Horizontalen. In der Regel schließt sich dabei der erste ungekrümmte Bereich des jeweiligen Schenkels jeweils unmittelbar an die Scheitellinie an.

Zusätzlich oder alternativ zu der Erniedrigung der Strömungsgeschwindigkeit durch geeignete Ausbildung der Profile kann eine Verringerung der Strömungsgeschwindigkeit erfindungsgemäß durch folgende Maßnahme erreicht werden:
Mindestens zwei, vorzugsweise mindestens drei der insbesondere unmittelbar aufeinander folgenden, übereinander angeordneten Strömungskanäle werden bezogen
auf die Strömungsrichtung im Sinne einer Parallelschaltung an eine gemeinsame Zuführleitung bzw. an einen gemeinsamen Zuführkanal angeschlossen. Vorzugsweise sind die parallel geschalteten Strömungskanäle dabei die mindestens zwei, vorzugsweise die mindestens drei obersten Strömungskanäle des Bunkers. In diesen parallel geschalteten Strömungskanälen ist daher die Strömungsgeschwindigkeit gegenüber dem Stand der Technik wirksam herabgesetzt.

Was die gemeinsame Zuführleitung betrifft, so verläuft diese innerhalb des Bunkers vorzugsweise wenigstens annähernd vertikal, allgemein gesprochen jedenfalls winklig zur Horizontalen.

Zweckmäßigerweise verbindet die gemeinsame Zuführleitung die parallel geschalteten Strömungskanäle an deren gegenüberliegenden Stirnseiten miteinander sowie mit der gegenüberliegenden Stirnseite eines unterhalb der parallel geschalteten Strömungskanäle angeordneten, weiteren Strömungskanals.

Weitere Merkmale der vorliegenden Erfindung ergeben sich aus den beigefügten Patentansprüchen, aus der nachfolgenden Beschreibung bevorzugter Ausführungsbeispiele der Erfindung sowie aus den beigefügten Zeichnungen.

Darin zeigen:
- Fig. 1: eine erfindungsgemäße Vorrichtung zum Vorwärmen eines Glasscherben- gemenges in Schrägansicht, teilweise geschnitten,
- Fig. 2a - Fig. 2d: Querschnitte von Profilen von unterschiedlichen, in der Vorwärmvorrichtung erfindungsgemäß verwendbaren Strömungskanalprofilen.

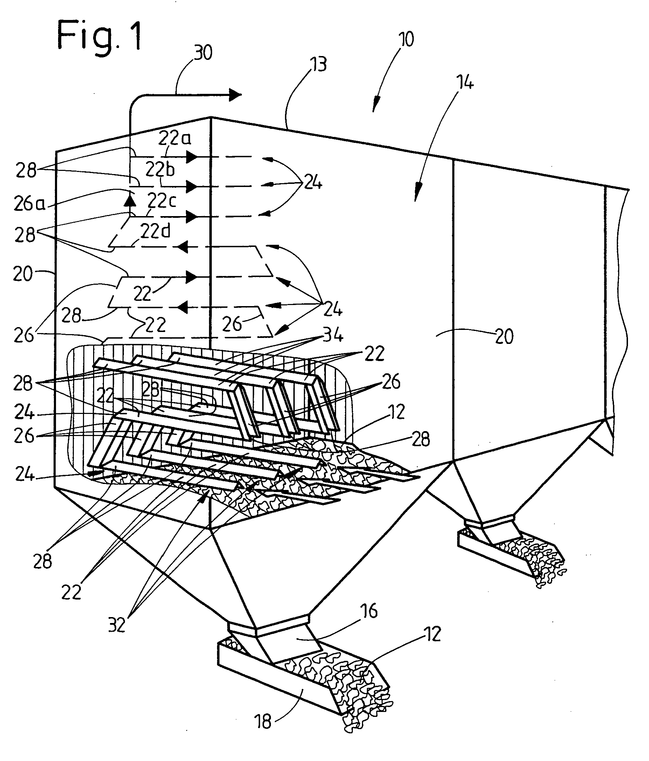

Die Fig. 1 zeigt eine erfindungsgemäße Vorrichtung 10 zum Vorwärmen eines Glasscherbengemenges 12 mit einem Bunker 14.

Dem Bunker 14 wird das Glasscherbengemenge 12 kontinuierlich oder diskontinuierlich durch eine obere Öffnung 13 zugeführt. Einem unteren, trichterförmigen Auslauf 16 ist das Glasscherbengemenge 12 schließlich zu entnehmen. Anschließend wird es über eine Schwingrinne 18 oder einen anderen Förderer weitergefördert. Im Bunker 14 entsteht zumindest bei kontinuierlicher Beschickung mit Glasscherbengemenge 12 auf diese Weise in der Regel ein annähernd kontinuierlicher Fluss desselben von oben nach unten. In nachfolgend noch näher erläuterter Weise wird das Glasscherbengemenge 12 auf seinem Weg durch den Bunker 14 erwärmt.

Nach Entnahme des Glasscherbengemenges 12 aus der Schwingrinne 18 wird das vorgewärmte Glasscherbengemenge 12 schließlich in an sich bekannter Weise einer nicht gezeigten Schmelzwanne eines ebenfalls nicht dargestellten Glasschmelzofens zugeführt, in dem der eigentliche Schmelzvorgang erfolgt.

Zur Vorwärmung des Glasscherbengemenges 12 im Bunker 14 werden dem Bunker 14 während des Schmelzvorgangs in dem Glasschmelzofen entstehende, heiße Abgase zugeführt. Innerhalb des Hauptteils des Bunkers 14, der im vorliegenden Fall im Querschnitt quadratisch ist und durch aufrechte Seitenwände 20 gebildet ist, befindet sich eine Vielzahl horizontal verlaufender Strömungskanäle 22. Im vorliegenden Fall sind innerhalb des Hauptteils des Bunkers 14 effektiv zehn jeweils übereinander angeordnete Kanalebenen 24 vorhanden. Pro Kanalebene 24 sind jeweils drei Strömungskanäle 22 in einer horizontalen Ebene nebeneinander angeordnet. Weiter sind die Strömungskanäle 22 der einzelnen aufeinanderfolgenden Kanalebenen 24 versetzt zueinander angeordnet, und zwar jeweils in etwa um den halben Abstand zweier nebeneinander liegender Strömungskanäle 22 in einer Kanalebene. Die einzelnen Strömungskanäle 22 sind somit "auf Lücke" liegend annähernd gleichmäßig im Inneren des Bunkers 14 verteilt.

Die Abgase des Glasschmelzofens werden den Strömungskanälen 22 der untersten Kanalebene 24 des Bunkers 14 an einer Stirnseite 28 mittels nicht gezeigter Abgasanschlussleitungen in Pfeilrichtung zugeführt. Die Strömungskanäle 22 der unteren sieben Kanalebenen 24 sind an ihren jeweils gegenüberliegenden Stirnseiten 28 von eine Ebene 24 zur anderen durch Verbindungsleitungen 26 verbunden, nämlich durch Überströmkanäle 26. Diese unteren sieben Strömungskanäle 22 sind bezogen auf die Strömungsrichtung des Abgases daher hintereinander geschaltet, nämlich in Reihe bzw. in Serie. Die obersten drei Strömungskanäle 22 dagegen sind bezogen auf die Strömungsrichtung des Abgases parallel geschaltet, was später noch näher erläutert wird.

Während des Vorwärmens des Glasscherbengemenges 12 durchströmen die heißen Abgase die Strömungskanäle 22 etagenweise sowie die Überströmkanäle 26 von unten nach oben. Bezogen auf den Fluss des Glasscherbengemenges 12 von oben nach unten werden somit die Abgase im Kreuzgegenstrom durch das Glasscherbengemenge 12 geführt.

Das Abgas gibt auf seinem Strömungsweg die in ihm gespeicherte Wärmeenergie zum Großteil an das vorbeifließende Glasscherbengemenge 12 ab und erwärmt dieses. Das im Anschluss weitgehend abgekühlte bzw. das bezogen auf dessen Eintrittstemperatur im unteren Bunkerbereich kühlere Abgas wird schließlich mittels Abgasabführleitungen 30 aus dem oberen Teil des Bunkers 14 geführt. In der Fig. 1 ist nur eine der Abführleitungen 30 gezeigt. Allerdings sind im vorliegenden Ausführungsbeispiel in horizontaler Richtung nebeneinander drei voneinander getrennte, vertikale Abgaskreisläufe 32 gebildet, nämlich durch die in einer Kanalebene 24 jeweils nebeneinander angeordneten Strömungskanäle 22 bzw. die nebeneinander angeordneten Überströmkanäle 26. Dementsprechend existiert je vertikalem Abgaskreislauf 32 zunächst eine eigene Abführleitung 30. Die drei Abführleitungen 30 können allerdings im weiteren Verlauf zusammengeführt sein.

Jeder Strömungskanal 22 ist im vorliegenden Fall in etwa gleich ausgebildet. Er verfügt in der in Fig. 1 gezeigten Ausführungsführungsform über eine obere Hälfte, nämlich über ein längliches Profil 34, in diesem Fall ein Winkelprofil 34 mit zwei gleichen Schenkeln 36a, 36b. Dabei sind die Profile 34 der Strömungskanäle 22 innerhalb des Bunkers 14 derart angeordnet, dass deren beiden Schenkel 36a, 36b in etwa unter einem gleichen Winkel nach schräg unten zeigen, nämlich unter einem Winkel von ca. 45° zur Horizontalen.

Die Profile 34 der Fig. 1 weisen jeweils eine obere Scheitellinie 38 auf, in diesem Fall eine ausgeprägte Scheitelkante 38, von der ausgehend sich die beiden Schenkel 36a, 36b nach schräg unten erstrecken.

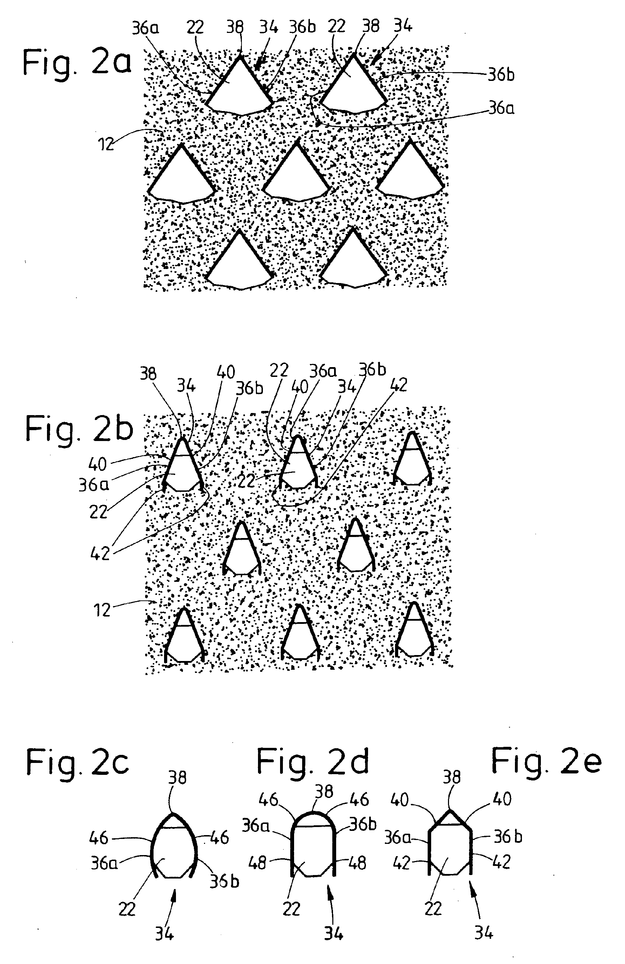

Die Profile 34 bilden jeweils ein Dach für das von oben nach unten fließende Glasscherbengemenge 12. Hierdurch bildet sich unterhalb des Profils 34 jeweils ein Schüttkegel im Glasscherbengemenge 12 aus, der die zweite Hälfte der Strömungskanäle 22 bildet. Mit anderen Worten wird die Randfläche eines jeden Strömungskanals 22 zur unteren Hälfte unmittelbar durch das Glasscherbengemenge 12 gebildet. Die Ausbildung der Profile 34 der Fig. 1 sowie des sich dadurch ergebenden Strömungskanals 22 ist in Fig. 2a im Querschnitt gut zu erkennen.

Während des Durchströmens des Bunkers 14 tritt das Abgas mit dem Glasscherbengemenge in Kontakt bzw. in Wechselwirkung. Insbesondere im unteren Bereich des Bunkers 14 nimmt das Abgas Staub aus dem Glasscherbengemenge auf. Aus emissionsschutzrechtlichen Gründen muss diese Staubaufnahme so gering wie möglich gehalten werden. Zudem sind in dem Abgas enthaltene Schadstoffe aus dem Abgas auszufiltern.

Dies geschieht durch nicht dargestellte, im Anschluss an das Durchströmen des Bunkers 14 erfolgende Filtereinrichtungen, wie etwa einen Nasswäscher und/oder einen nachfolgenden Elektrofilter.

In besonderer Weise wird nun erfindungsgemäß erreicht, dass das aus dem Bunker 14 durch die Abgasabführleitungen 30 herausgeführte Abgas einen besonders geringen Staubanteil aufweist sowie besonders niedrige Konzentrationen anderer Schadstoffe.

Hierzu sind - wie weiter oben bereits angedeutet - gemäß einer ersten Maßnahme in jedem vertikalen Abgaskreis 32 die obersten drei Strömungskanäle 22a, b, c parallel geschaltet. Mit anderen Worten sind die obersten drei Strömungskanäle 22a, b, c im Sinne einer Parallelschaltung an eine gemeinsame Abgaszuführleitung 26a angeschlossen, nämlich an den gemeinsamen Überströmkanal 26a. Zu diesem Zweck sind die obersten vier Strömungskanäle 22a, b, c, d an ihren gegenüberliegenden Stirnseiten 28 mittels des entsprechenden Überströmkanals 26a untereinander verbunden.

Durch diese Parallelschaltung der obersten drei Strömungskanäle 22a, b, c wird die Strömungsgeschwindigkeit des Abgases in diesen Strömungskanälen 22a, b, c erheblich reduziert. Überraschenderweise hat sich gezeigt, dass sich durch diese Erniedrigung der Strömungsgeschwindigkeit Staub, dass das Abgas im unteren Bereich höherer Strömungsgeschwindigkeit aus dem Glasscherbengemenge aufnimmt, in diesem oberen Bereich mit reduzierter Strömungsgeschwindigkeit wieder an das Glasscherbengemenge 12 abgibt.

Weiter hat sich gezeigt, dass das Abgas durch die genannte Strömungsgeschwindigkeitsreduktion noch in anderer Weise mit dem Glasscherbengemenge wechselwirkt, und zwar indem verschiedene andere Schadgaskomponenten ausgefällt bzw. auf das Glasscherbengemenge 12 übertragen werden. Die genaueren chemischen Vorgänge werden zur Zeit noch untersucht. Im Ergebnis führt die Reduktion der Strömungsgeschwindigkeit zu einer erheblichen Erniedrigung der Schadgaskonzentration im Abgas. Dies gilt insbesondere für die Schadgaskomponenten SOₓ, HF sowie HCL.

Vor der Erfindung war es notwendig, dem Abgas bei der der Glasgemengevorwärmung nachfolgenden Filterung desselben mittels Elektrofilter Additive hinzuzusetzen, um die Wirksamkeit der Elektrofilterung derart zu erhöhen, dass das gereinigte Abgas emissionsrechtlich unbedenklich war. Vorteilhafterweise ist dies durch die erfindungsgemäße Maßnahme der Erniedrigung der Strömungsgeschwindigkeit nunmehr nicht mehr zwingend erforderlich. Der nachgeschaltete Elektrofilter wird insgesamt nachhaltig entlastet.

Eine weitere Reduktion der Strömungsgeschwindigkeit gegenüber dem Stand der Technik wird durch eine veränderte Querschnittsform der Strömungskanäle 22 erreicht.

Aus dem Stand der Technik sind die in Fig. 2a gezeigten Winkelprofile 34 grundsätzlich bekannt. Erfindungsgemäß werden neuartige Profile 34 eingesetzt, die letztlich zu veränderten, insbesondere vergrößerten Strömungsquerschnitten führen.

In Fig. 2b sind Profile 34 gezeigt, bei denen die beiden Schenkel 36a, 36b jeweils über einen ersten ungekrümmten Abschnitt bzw. Bereich 40 sowie einen sich daran anschließenden, zweiten ungekrümmten Bereich 42 verfügen. Der erste ungekrümmte Bereich 40 weist gegenüber der Horizontalen einen kleineren Winkel auf, im vorliegenden Fall etwa 70°, als der zweite ungekrümmte Bereich 42, der im vorliegenden Fall unter 90° zur Horizontalen verläuft. Das Profil 34 ist symmetrisch ausgebildet mit zwei jeweils identischen Schenkeln 36a, 36b. Wie weiter gezeigt ist, laufen die ersten ungekrümmten Bereiche 40 der beiden Schenkel 36a, 36b nicht unter Bildung einer Knickkante bzw. Knicklinie 38 aufeinander zu. Vielmehr bilden Sie einen gekrümmten bzw. gewölbten Verbindungsbereich 44 aus mit einer oberen (gedachten), horizontal senkrecht zur Bildebene verlaufenden Scheitellinie 38.

Eine weitere vorteilhafte Profilform zeigt Abbildung 2c. Jeder Schenkel 36a, 36b verfügt hier über einen Bereich 46 einer konvexe Krümmung nach außen, ohne dass sich ungekrümmte Bereiche anschließen. Die Schenkel 36a, 36b verlaufen in ihrem oberen Verbindungsbereich winklig unter Bildung einer Scheitellinie 38, die als ausgeprägte Knicklinie bzw. Knickkante 38 ausgebildet ist. Anders ausgedrückt ist das Profil 34 der Abbildung 2c derart ausgebildet, dass sich die Tangente, die die konvexe Krümmung 46 des Schenkels 36a in einem auf der Knicklinie 38 bzw. Scheitellinie 38 liegenden Scheitelpunkt des Profils 34 beschreibt sowie die Tangente, die die konvexe Krümmung des anderen Schenkels 36b in demselben Scheitelpunkt beschreibt, winklig zueinander verlaufen und sich insbesondere im Scheitelpunkt schneiden.

Bei dem Profil 34 der weiteren Ausführungsform der Fig. 2d dagegen liegen im Gegensatz dazu die Tangente, die die konvexe Krümmung 46 des Schenkels 36a in einem auf der Scheitellinie 38 liegenden Scheitelpunkt des Profils 34 beschreibt sowie die Tangente, die die konvexe Krümmung des Schenkels 36b in demselben Scheitelpunkt beschreibt, übereinander bzw. sie sind identisch. Das Profil 34 verfügt dann im oberen Bereich beispielsweise über eine insgesamt halbkreis- oder bogenartige Form ohne ausgebildete Knicklinie- oder Knickkante. Ausgehend von der Scheitellinie 38 verfügt jeder Schenkel 36a, 36b über einen ersten Bereich mit konvexer Krümmung 46, an den sich ein zweiter, vertikal verlaufender, ungekrümmter Bereich 48 anschließt. Die konvexen Krümmungen 46 der beiden jeweiligen Schenkel 36a, 36b sind identisch.

Eine weitere Ausführungsform des Profils 34 zeigt die Fig. 2e. Systematisch entspricht diese Ausführungsform der Ausführungsform der Fig. 2b. Allerdings ist anders als bei der Ausführungsform der Fig. 2b hier der erste ungekrümmte Bereich 40 kürzer als der zweite ungekrümmte Bereich 42. Zudem ist der Winkel des ersten ungekrümmten Bereichs 40 zur Horizontalen kleiner als der des Profils 34 der Fig. 2b. Er beträgt hier ca. 45°.

Entscheidend ist, dass die jeweiligen Profil 34 derart ausgebildet sind, dass eine möglichst große Querschnittsfläche des Strömungskanals 22 erreicht wird.

## Patentansprüche

1. Vorrichtung zum Vorwärmen eines vorzugsweise mit Rohstoffen zur Glasherstellung angereicherten Glasscherbengemenges (12) mit einem Bunker (14) und darin gebildeten Strömungskanälen (22), wobei der Bunker (14) eine Mehrzahl von vertikal - ggf. versetzt - übereinander angeordneten, winklig zur Vertikalen, insbesondere horizontal verlaufenden Strömungskanälen (22) aufweist, wobei jeder Strömungskanal (22) zusammengesetzt ist aus einem Profil (34) zur Bildung einer oberen Hälfte desselben sowie einem sich unter dem Profil ausbildenden Schüttkegel aus dem Glasscherbengemenge (12), der die untere Hälfte des Strömungskanals (22) bildet, und wobei das Profil über mindestens zwei Schenkel (36a, b) verfügt, die den zwischen diesen befindlichen Raum seitlich begrenzen, **dadurch gekennzeichnet, dass** zur Verringerung der Strömungsgeschwindigkeit in den Strömungskanälen (22) mindestens ein Schenkel (36a, b) des Profils (34), vorzugsweise beide Schenkel, über mindestens einen konvex gekrümmten Bereich (46) verfügt und/oder über einen ersten ungekrümmten Bereich (40) mit einem relativ zur Horizontalen ersten Neigungswinkel, an den sich ein ungekrümmter zweiter Bereich (42) mit einem abweichenden Neigungswinkel anschließt und/oder dass zur Verringerung der Strömungsgeschwindigkeit in den Strömungskanälen (22) mindestens zwei (22a, b, c) der unmittelbar - ggf. versetzt - übereinander angeordneten Strömungskanäle (22) bezogen auf die Strömungsrichtung im Sinne einer Parallelschaltung an eine gemeinsame Zuleitung (26a) angeschlossen sind.

2. Vorrichtung gemäß Anspruch 1, **dadurch gekennzeichnet, dass** die mindestens zwei (22a, b, c), vorzugsweise die mindestens drei obersten Strömungskanäle des Bunkers (14) an die gemeinsame Zuleitung (26a) angeschlossen sind, vorzugsweise indem gegenüberliegende Stirnseiten (28) der Strömungskanäle (22a, b, c) mit der Zuleitung (26a) verbunden sind.

3. Vorrichtung gemäß einem oder mehreren der vorhergehenden Ansprüche, **dadurch gekennzeichnet, dass** die gemeinsame Zuleitung (26a) wenigstens annähernd vertikal verläuft.

4. Vorrichtung gemäß einem oder mehreren der vorhergehenden Ansprüche, **dadurch gekennzeichnet, dass** jeweils zwei unmittelbar übereinander angeordnete Strömungskanäle (22) durch insbesondere an ihren gegenüberliegenden Stirnseiten angeordnete, mindestens abschnittsweise wenigstens annähernd vertikal verlaufende Verbindungsleitungen (26) miteinander verbunden sind.

5. Vorrichtung gemäß einem oder mehreren der vorhergehenden Ansprüche, **dadurch gekennzeichnet, dass** die beiden Schenkel (36a, b) ausgehend von einer oberen, vorzugsweise horizontal verlaufenden Scheitellinie (38) des Profils (34) zu beiden Seiten der Scheitellinie (38) wenigstens bereichsweise winklig zur Horizontalen nach unten verlaufen.

6. Vorrichtung gemäß Anspruch 5, **dadurch gekennzeichnet, dass** beide Schenkel (36a, b) die Bereiche konvexer Krümmung (46) aufweisen, wobei sich diese Bereiche (46) jeweils unmittelbar an die obere Scheitellinie (38) des Profils (34) anschließen bzw. dort miteinander verbunden sind.

7. Vorrichtung gemäß Anspruch 6, **dadurch gekennzeichnet, dass** das Profil (34) derart ausgebildet ist, dass sich die Tangente, die die konvexe Krümmung (46) des einen Schenkels (36a) in einem auf der Scheitellinie (38) liegenden Scheitelpunkt des Profils (34) beschreibt sowie die Tangente, die die konvexe Krümmung (46) des anderen Schenkels (36b) in demselben Scheitelpunkt beschreibt, winklig zueinander verlaufen.

8. Vorrichtung gemäß Anspruch 6, **dadurch gekennzeichnet, dass** das Profil (34) derart ausgebildet ist, dass die Tangente, die die konvexe Krümmung (46) des einen Schenkels (36a) in einem auf der Scheitellinie (38) liegenden Scheitelpunkt des Profils (34) beschreibt sowie die Tangente, die die konvexe Krümmung (46) des anderen Schenkels (36b) in demselben Scheitelpunkt beschreibt, identisch sind bzw. übereinander liegen.

9. Vorrichtung gemäß Anspruch 6, 7 oder 8, **dadurch gekennzeichnet, dass** sich jeweils an den Bereich konvexer Krümmung (46) ein ungekrümmter, insbesondere vertikal verlaufender Bereich (48) des Profils (34) anschließt.

10. Vorrichtung gemäß Anspruch 5, **dadurch gekennzeichnet, dass** beide Schenkel (36a, b) die ungekrümmten Bereiche (40, 42) mit erstem bzw. zweitem Neigungswinkel aufweisen, wobei sich jeweils der Bereich (40) mit dem ersten Neigungswinkel unmittelbar an die Scheitellinie (38) anschließt.

11. Vorrichtung gemäß Anspruch 5, **dadurch gekennzeichnet, dass** der erste Neigungswinkel kleiner ist als der zweite Neigungswinkel.

12. Vorrichtung gemäß einem oder mehreren der vorhergehenden Ansprüche, **dadurch gekennzeichnet, dass** der zweite Neigungswinkel annähernd 90° zur Horizontalen beträgt.
